# EUROPEAN PATENT APPLICATION

(11) **EP 3 650 180 A1**
(43) Date of publication of application: **13.05.2020**
(21) Application number: 18204871.0
(22) Date of filing: 07.11.2018
(51) Int. Cl.: B25J 11/00, B25J 19/02, G01B 11/30, G01N 21/88, G01N 21/95

(54) **SYSTEM FOR OPTICAL INSPECTION**

(71) Applicant: Grigo, Wolfgang, 74635 Kupfezell (DE)
(72) Inventor: Grigo, Wolfgang, 74635 Kupferzell (DE); Grigo, Constantin, 80805 Munich (DE)
(74) Representative: Hoffmann Eitle

(57) **Abstract**

A system comprising an inspection device for optical inspection of a sample, in particular based on industrial image processing, wherein the inspection device is adaptable to different inspection tasks and/or samples. The system comprises a main component group comprising at least a manipulator, preferably a robot, more preferably a collaborative robot, and a module component group comprising a plurality of modules for combination with the main component group for inspection of the sample. The plurality of modules comprises a camera as module of type A, and a lighting as module of type B. The inspection device comprises the camera, the lighting, and the manipulator, and is configured to be adapted to a particular inspection task and/or to a particular sample by positioning the camera, the lighting, and the manipulator according to the particular inspection task and/or relative to the particular sample.

## Description

### FIELD OF THE INVENTION

The present invention relates to a system and a method for optical inspection of a sample.

### BACKGROUND

In the field of quality management of industrial processing, inspection of manufactured or processed samples plays an important role. Such inspection is often based on visual/optical inspection. Due to the growing demands of several industries, a faster and more reliable visual/optical inspection technology is required.

The young technology of industrial image processing comes very close to these expectations and makes novel optical inspection techniques possible. The advantages of industrial image processing are the speed in sample detection and processing, the scanning of multiple parameters with one shot/recording, as well as the inspection reliability, especially in comparison to visual inspections carried out by humans.

On the other hand, the technology of industrial image processing is confronted with almost unlimited application possibilities. Be it in the optical inspection of incoming goods or at the supplier, be it in the different production steps, or for sorting tests.

The process from planning to implementation and use of optical inspection systems based on industrial image processing usually takes a considerable amount of time and costs. With durations in the order of magnitude of at least several months, implementation lacks the speed required in industry until use for on-site application.

### SUMMARY OF THE INVENTION

In view of the above-described problems, it is an object of the present invention to provide a system and method which allow for a quick implementation.

The above-described problems are solved by the system according to claim 1, the method according to claim 14, and by the method according to claim 16, respectively. Preferred embodiments are set out in the dependent claims.

According to claim 1, there is provided a system comprising an inspection device for optical inspection of a sample, in particular based on industrial image processing, wherein the inspection device is adaptable or adjustable to different inspection tasks and/or samples. The system comprises a main component group comprising at least a manipulator, preferably a robot, more preferably a collaborative robot, and a module component group comprising a plurality of modules for combination and/or associated with the main component group for inspection of the sample. The plurality of modules comprises at least one camera as module of type A, preferably as exchangeable module of type A, more preferably as detachably attachable module of type A, and, preferably, associated with an inspection task and/or a sample, and at least one lighting as module of type B, preferably as exchangeable module of type B, more preferably as detachably attachable module of type B, and, preferably, associated with an inspection task and/or a sample. The inspection device comprises the camera, the lighting, and the manipulator, and is configured to be adapted or adjusted to (perform) a particular inspection task and/or to (inspect) a particular sample by positioning the camera, the lighting, and the manipulator according to the particular inspection task and/or relative to the particular sample. Preferably, the camera, the lighting, and the manipulator can be (re-)positioned according to the particular inspection task and/or relative to the particular sample, so that the inspection device is configured to be adapted or adjusted to (perform) a particular inspection task and/or to (inspect) a particular sample.

Since the inspection device for optical inspection can be adapted to (perform) a particular inspection task and/or to (inspect) a particular sample, it is possible to provide a versatile system for optical inspection. The versatility is due to the fact that the camera, the lighting, and the manipulator can be positioned according to the particular inspection task and/or relative to the particular sample. This allows for a high flexibility of the system for optical inspection. In contrast to that, state of the art systems are specifically designed for a particular inspection task and/or sample.

Moreover, the system can be adapted to a particular inspection task and/or to a particular sample within a reduced implementation time until use for on-site application compared to the state of the art. This allows for fast implementation of optical inspection of new products and/or of new parameters/features of the product, for example, and, hence, may contribute to faster product launch.

Furthermore, as it is not necessary to specifically design a completely new system for every particular inspection task and/or sample, it is possible to save costs.

The plurality of modules comprises at least one camera as module of type A, and at least one lighting as module of type B. In the following, a preferred embodiment of the invention will be described by means of systems, wherein the plurality of modules comprises more than one camera (two cameras) as module of type A and more than one lighting (two lightings) as module of type B. The concepts described hereinafter are likewise applicable to the system in which the plurality of modules comprises a single camera as module of type A and a single lighting as module of type B. In other words, the system in which the plurality of modules comprises one camera as module of type A and one lighting as module of type B is optionally extensible with more than one camera as module of type A and more than one lighting as module of type B.

Preferably, the plurality of modules comprises at least two, more preferably at least three cameras as mutually exchangeable modules of type A and associated with mutually different inspection tasks and/or samples, and/or at least two, more preferably at least three lightings as mutually exchangeable modules of type B and associated with mutually different inspection tasks and/or samples. The inspection device may be configured to be adapted to (perform) a particular inspection task and/or to (inspect) a particular sample by comprising a camera selected out of the type A-modules according to the particular inspection task and/or the particular sample, a lighting selected out of the type B-modules according to the particular inspection task and/or the particular sample, and, preferably, by positioning the selected camera, the selected lighting, and the manipulator according to the particular inspection task and/or relative to the particular sample.

Since the inspection device for optical inspection can be adapted to perform a particular inspection task and/or to inspect a particular sample, it is possible to provide a versatile system for optical inspection. The versatility of the system for optical inspection is further increased due to the fact that the inspection device can be provided with mutually exchangeable modules, such as cameras and lightings (i.e. type A-modules and type B-modules), which are selected out of the plurality of modules of the module component group according to the particular inspection task and/or the particular sample. In contrast to that, state of the art systems are specifically designed for a particular inspection task and/or sample and can hardly and if at all, only in a very limited way, be adapted to different inspection tasks and/or samples.

Moreover, as the modules of type A and type B (i.e., cameras and lightings) are mutually exchangeable, it is possible to provide a flexible, modular system which can be adapted to a particular inspection task and/or to a particular sample within a reduced implementation time until use for on-site application compared to the state of the art. This allows for fast implementation of optical inspection of new products, for example, and, hence, may contribute to faster product launch.

Furthermore, as it is not necessary to specifically design a completely new system for every particular inspection task and/or sample, it is possible to save costs. Costs are also saved as modules and/or components can be reused. Therefore, also environment and resources can be protected.

In addition, by providing the modular system for optical inspection, a user of the system (for example a process engineer) is able to directly conduct so-called (pre-)feasibility or preliminary studies and to directly create a prototype or, for example, at least a production-line-compatible solution for a new inspection task.

In the present application, the expressions "system for optical inspection" and "optical inspection system" shall carry the same meaning. Also the short form "system" shall carry this meaning, unless it is combined with another feature, such as in the case of "camera system".

The system comprises an inspection device for optical inspection of a sample. Preferably optical inspection is based on industrial image processing. However, it is also conceivable that optical inspection is not based on industrial image processing, but on a less complex method.

According to the invention, the inspection device is adaptable to different inspection tasks and/or samples. Here, in a first variant, the inspection device is adaptable to different inspection tasks while the sample may remain the same. For example, the sample to be inspected may be a physical object of any shape and arranged at a fixed spatial position. The inspection device may perform a first and a second inspection task, wherein the first inspection task may be the optical inspection of a first particular side or from a first particular view of the sample, and the second inspection task may be the optical inspection of a second particular side or from a second particular view of the sample.

In a second variant, the inspection device is adaptable to different samples. For example, the inspection device may perform a certain inspection task, for instance, optically inspecting a particular side of a sample. The samples may change and the inspection device may perform the same inspection task on each of the samples to be inspected. In this case, the inspection device may be adaptable to the size or shape of the samples or any other property thereof in order to properly perform the same inspection task.

In a third variant, the inspection device is adaptable both to different inspection tasks and to different samples.

The system comprises a main component group. The main component group comprises at least one manipulator. The manipulator may comprise/be a stand, a height-adjustable stand, a linear drive and/or actuator, a rotational drive and/or actuator, a belt conveyor system, a gripper or grippers, preferably a collaborative gripper or grippers (which may be configured to stop automatically when approaching or getting in contact with the user), a fixture or fixtures, and/or combinations thereof. Preferably, the manipulator comprises (is) a robot, for example, a robot arm, such as a 6-axis robot arm. The robot may be a non-collaborative robot. In this case, in order to ensure proper safety precautions for a user, the non-collaborative robot may be surrounded by a cage, such that the user cannot get unintentionally in contact with the non-collaborative robot. More preferably, the manipulator (is) comprises a collaborative robot, for example, a collaborative robot arm. In that case, a cage surrounding the robot arm may not be necessary (depending on a risk analysis) in order to ensure proper security precautions for a user because the collaborative robot may be configured to stop automatically when approaching or getting in contact with the user.

The manipulator as described above may, but is not limited thereto (see below), be configured to hold and/or support the sample.

The above components described in context with the manipulator may be combinable with one another and may be or may be designated as manipulator modules. In other words, the manipulator may be modular. The manipulator modules may form a manipulator module group. Accordingly, it is also conceivable that the system for optical inspection comprises at least one manipulator module selected out of the manipulator module group. For example, manipulator module group may comprise a stand, a height-adjustable stand, a linear drive and/or actuator, a rotational drive and/or actuator, a belt conveyor system, a gripper or grippers, preferably a collaborative gripper or grippers (which may be configured to stop automatically when approaching or getting in contact with the user), a fixture or fixtures, and/or combinations thereof. Preferably, the manipulator comprises (is) a robot, for example, a robot arm, such as a 6-axis robot arm. The robot may be a non-collaborative robot. More preferably, the manipulator (is) comprises a collaborative robot, for example, a collaborative robot arm.

The system further comprises a module component group comprising a plurality of modules for combination and/or associated with the main component group for inspection of the sample. The plurality of modules may comprise at least two modules (A- and B-type), preferably more than two modules for combination with the main component group. For instance, the module component group may comprise modules for combination with the manipulator. However, the module component group may also comprise modules for combination with the main component group other than the manipulator.

The cameras are modules of type A. In this context, the expression "type A" is to be understood as a name for a certain type of modules. In other words, all modules of type A are cameras. Since the cameras are mutually exchangeable and associated with mutually different inspection tasks and/or samples, it is possible to combine a specific camera, depending on the requirements of the optical inspection task and/or the sample, of the module component group with the main component group. Accordingly, it is possible to provide a versatile and flexible system for optical inspection.

In the present application, the term "camera(s)" shall also include/mean "optical sensor(s)". In general, the cameras may be any type of cameras, which are able to take pictures and/or videos of a sample to be inspected. Preferably, the cameras are digital cameras having camera sensors. More preferably, the cameras are cameras and/or camera systems known in the art in the field of industrial image processing. For example, the cameras may be complete camera systems, such as so-called smart cameras or line scan cameras which may have a laser line projector for scanning the sample.

It is also conceivable that a camera system comprises more than one camera or camera sensor.

The lightings are modules of type B. In this context, the expression "type B" is to be understood as a name for another certain type of modules. In other words, all modules of type B are lightings. Since the lightings are mutually exchangeable and associated with mutually different inspection tasks and/or samples, it is possible to combine a specific lighting, depending on the requirements of the optical inspection task and/or the sample, of the module component group with the main component group. Accordingly, it is possible to provide a versatile and flexible system for optical inspection. For example, the lighting may be selected in accordance with the reflective properties of the sample to be inspected.

In general, the lighting may be any type of light source, which may illuminate the sample to be inspected, such that the camera collects the reflected light from the sample in order to create a picture or a series of pictures and/or particular parameters/features of the sample. Depending on the inspection task and/or the sample to be inspected, the lighting may emit light in the visible spectral range, for example, one or more colors, in the infrared spectral range, in the ultraviolet spectral range, but is not limited thereto. It is also conceivable that the lighting combines two or more spectral ranges. Furthermore, the lighting may comprise a laser light source emitting only one wavelength or a narrow range of wavelengths, preferably tunable wavelengths. Moreover, the lighting may continuously emit light or may further comprise a control unit which is configured to control the lighting, such that the lighting emits short pulses of light for a pulsed/clocked illumination of the sample. The lighting may also be a lighting group.

It is also conceivable that a type A-module and a type B-module form/are an integrated module. Preferably, each type A-module and each type B-module forms/is an integrated module. In particular, it is conceivable that the lighting is integrated in the camera. An example would be a 3D-camera with integrated lighting.

A type A-module and a type B-module may also form/be a unit without forming/being an integrated module. For example, a unit comprising a camera and a lighting may be provided in which unit, preferably, the camera and the lighting are coaxially aligned.

Further specific examples of lightings may comprise ring lights, light domes, areal lights, flashlights, spotlights, and combinations thereof. The light sources of the lightings may be light emitting diodes (LEDs).

According to the invention, the inspection device is configured to be adapted to perform a particular inspection task and/or to inspect a particular sample. This is achieved because the inspection device comprises a camera selected out of the type A-modules according to the particular inspection task and/or the particular sample, a lighting selected out of the type B-modules according to the particular inspection task and/or the particular sample, and the manipulator. In other words, depending on the requirements of a specific optical inspection task and/or a particular sample, a camera and a lighting are selected according to these requirements. For example, the inspection task may be to create a 3D-picture of the sample. In this example, a 3D-camera may be selected out of the type A-modules and a lighting cooperating with the 3D-camera may be selected out of the type B-modules. Alternatively, a 3D-camera with integrated lighting may be selected out of the type A-modules. As the camera and the lighting constitute modules of the module component group, they are configured for combination with the main component group. The main component group comprises at least the manipulator. Accordingly, the camera and/or the lighting may be combined with the manipulator for optical inspection of the sample. For example, in case of a robot arm as the manipulator, the camera and/or the lighting may be attached to the robot arm in order to optically inspect the sample from different positions with respect to the sample.

Comprising these three components, i.e. the camera, the lighting, and the manipulator, the inspection device of the optical inspection system is able to perform a particular inspection task and/or to inspect a particular sample. If another inspection task and/or another sample is to be inspected, for which one or more different cameras and/or lightings are needed, the inspection device can be adapted to the particular inspection task and/or sample by selecting the relevant modules out of the module component group and to replace the components with each other. In this case, it is also conceivable that a certain type of manipulator as described above is used, as needed. Accordingly, it is possible to provide a versatile optical inspection system which is flexible, cost-efficient, and allows for reduced implementation times until use for on-site application.

Preferably, for performing optical inspection, the selected camera, the selected lighting, and the manipulator may be positioned according to the particular inspection task and/or relative to the particular sample to be inspected. For example, the sample to be inspected may be placed or fixed at a certain position, while the camera and, optionally, the lighting are attached to the manipulator. The manipulator, which preferably is a robot, may then move around the sample to one or more certain positions in order to optically inspect the sample.

It is also conceivable that more than one camera and/or lighting is attached to the manipulator.

Furthermore, it is conceivable that the sample to be inspected is fixed to or gripped by the manipulator and the camera and, optionally, the lighting are placed at fixed positions. For example, in case the manipulator may be/comprise a belt conveyor system, the sample to be inspected may be placed on the belt conveyor system and the camera, for example a smart camera having a laser line projector, may inspect the sample (profile) while the sample is moving on the belt conveyor system. Furthermore, the lighting may be specifically arranged for bright-field and/or dark-field and/or transmitted-light inspection techniques, for example.

Since the selected camera, the selected lighting, and the manipulator can be positioned according to the particular inspection task and/or relative to the particular sample, it is possible to provide a flexible system for optical inspection.

Optionally, at least some, preferably all, of the plurality of modules comprise an interface portion for detachable attachment to the main component group, wherein the interface portion is system-compatible, preferably standardized. The interface portion may be a certain portion or area of the module which is configured to engage corresponding portions of the main component group, i.e. portions of parts of the main component group. For example, the cameras, i.e. the modules of type A, may comprise such an interface portion for detachable attachment to the manipulator for performing optical inspection. For example, interface portions may comprise a screw connection, clamp connection, plug connection, magnetic connection, and combinations thereof. Since the modules are detachably attachable to the main component group via the interface portion, it is possible to adapt the inspection device to a particular inspection task and/or to a particular sample with little effort. In contrast to that, most systems of the state of the art do not comprise detachably attachable modules, such as cameras, which can be easily exchanged. Alternatively and/or additionally, the interface portion comprises an adapter which may allow for the combination of modules which do not have system-compatible interface portions.

The fact that the interface portion is system-compatible may mean that the interface portion is specifically designed for a particular optical inspection system according to the invention. For example, there may be a first optical inspection system which may comprise a plurality of modules wherein at least some, preferably all, of the modules comprise an interface portion which is compatible with the main component group, i.e., with certain parts thereof. In this case, modules with interface portions being compatible with a second optical inspection system may not be compatible with the first optical inspection system. Providing a system-compatible interface portion, the modules can be readily attached and detached with the respective system.

The interface portion is preferably standardized. This may mean that the interface portion meets a particular standard, for example, with respect to size and/or type of the interface portion. With this configuration, all modules comprising this standardized interface portion can be detachably attached to the main component group. This allows for a quicker attachment and detachment of the respective modules, and, provided that many modules having the standardized interface portion are available, increases the versatility of the system. Furthermore, in case of new generations of modules, the modules of the old generation may be readily replaced with the modules of the new generation, provided that the modules of the new generation have the same standardized interface portion like the old generation modules.

Preferably, the plurality of modules further comprises camera lenses as mutually exchangeable modules of type C associated with mutually different inspection tasks and/or samples. In this context, the expression "type C" is to be understood as a name for another certain type of modules. In other words, all modules of type C are camera lenses. Since the camera lenses are mutually exchangeable and associated with mutually different inspection tasks and/or samples, it is possible to combine a specific camera lens, depending on the requirements of the optical inspection task and/or the sample, of the module component group with the main component group. Accordingly, it is possible to provide a versatile and flexible system for optical inspection.

In general, the camera lenses may be combined with the main component group via the cameras, i.e. the type A-modules. A specific camera lens may be combinable with only one camera. Preferably, a specific camera lens may be combinable with more than one camera, more preferably, with all cameras comprised in the plurality of modules, for example, via standardized interface portions. One or more camera lenses may also be combinable with the cameras via adapters.

Depending on the inspection task and/or the sample to be inspected, the camera lens may be a wide-angle lens, a telecentric lens, a fish-eye lens, a variable or electrically variable lens, or the like. Moreover, the camera lens may comprise several focal lengths or may comprise only one specific focal length.

In a preferred embodiment, the main component group further comprises a stand, preferably to which the selected camera, the selected lighting, and/or the sample are movably mountable, most preferably independently from each other. The stand may (be) comprise a holder, a support, or any other commercially available stand. The stand may comprise additional or integrated mounting elements to which the camera, the lighting, and/or the sample may be mountable. The stand may be configured such that the camera, the lighting, and/or the sample are movably mountable in a direction along the stand, i.e. along the long axis of the stand. The components may be movably mountable in discrete steps or continuously. If a desired position of the mounted components is set, the stand may be configured such that this position is fixed by appropriate fixation elements, such as fixation rings, fixation screws, and the like, preferably integrated in the mounting elements. In this case, the components mounted to the stand can be held reliably in position during operation of the system for optical inspection which allows for good inspection quality.

Since the stand is preferably designed such that at least one or all of the selected camera, the selected lighting, and/or the sample to be inspected are movably mountable thereto, it is also possible to provide a system for optical inspection which has a high flexibility in terms of positioning possibilities of the involved components. For instance, by providing a stand, the sample to be inspected may be held by the stand in an upper position, such that the camera which may be attached to the manipulator, such as a robot arm, is able to inspect the sample from below the sample. Further, since the selected camera and the selected lighting are most preferably movably mountable independently from each other with respect to the sample to be inspected, it is possible to optimally adjust the position of the lighting with respect to the camera such that predominantly the light of the lighting which is reflected by the sample is collected by the camera sensor and disturbing light from light sources other than the lighting is suppressed.

Preferably, the system for optical inspection may be configured to be used as a developer device for adjusting the configuration of the inspection device to the particular inspection task and/or the particular sample, by positioning the selected camera, the selected lighting, and the particular sample relative to each other, preferably by mounting at least one of them at the stand, by optimizing the positions relative to each other and by determining the optimized positions of the selected camera, the selected lighting, and the particular sample.

For example, the inspection device of the system for optical inspection may be adapted to a particular inspection task. In this case, the camera and the lighting, which are selected according to this particular inspection task, and the particular sample are positioned relative to each other according to the requirements of the particular inspection task. Preferably at least one of the selected camera, the selected lighting, and the sample are mounted at the stand for this purpose. For example, the selected camera and the selected lighting may be mounted at the stand and the sample may be located at a position in the vicinity of the stand. The relative positions between the selected camera, the selected lighting, and the sample may be optimized. For example, as explained above, the position of the camera and the lighting relative to the sample may be optimized according to the particular inspection task, such that the detection of disturbing light from light sources other than the lighting can be suppressed from being detected by the camera sensor. In general, optimizing the positions of the selected camera, the selected lighting, and the particular sample may be understood as positioning these components relative to each other such that a high quality of the optical inspection is achieved.

In this way, the optimized positions of the selected camera, the selected lighting, and the particular sample may be determined. In other words, with the developer-device configuration of the optical inspection system, it is possible to develop an optical inspection configuration according to the particular inspection task. For example, the determined optimized positions may then be used for series optical inspection of identical samples by means of the inspection device of the optical inspection system.

It is also conceivable that the manipulator, which preferably is a robot, is used instead of the stand in the developer-device configuration of the optical inspection system as described above. However, due to the simpler design/configuration of a stand compared to a manipulator adjustment of the configuration of the inspection device to the particular inspection task and/or the particular sample may be quicker when the stand is used.

Furthermore, in case the manipulator is/comprises a belt conveyor system, the sample may be placed on the belt conveyor system and optimizing the positions of the selected camera, the selected lighting, and the particular sample may comprise optimizing the sample moving speed, when the sample is moving on the belt conveyor system, such that a high quality of the optical inspection is achieved.

It is preferred that the developer device and the inspection device are integral, i.e. an integrated entity. Preferably, the main component group further comprises first and second plate portions, wherein the stand is arranged on the first plate portion so as to form part of the developer device and the manipulator is arranged on the second plate portion so as to form part of the inspection device. The first plate portion and the second plate portion are located adjacent to each other, preferably wherein the first plate portion and the second plate portion are connected to each other or integrally formed.

The first and second plate portions may be plate portions of any type, as long as they are configured to support the stand and the manipulator in a stable manner. For example, the first and second plate portions may be base plates like tabletops made of a wood material, metal, or other stable materials. The first and second plate portions may also be two tables or optical-table-like plate portions.

Preferably, the stand is arranged on the first plate portion so as to form part of the developer device and manipulator is arranged on the second plate portion so as to form part of the inspection device. However, it is also conceivable that both the stand and the manipulator are arranged either on the first plate portion or on the second plate portion so as to form part of a combination of the inspection device and the developer device.

Preferably, the first plate portion and the second plate portion are located adjacent to each other. Accordingly, the stand which forms part of the developer device and the manipulator which forms part of the inspection device may be located adjacent to each other. In other words, the inspection device and the developer device are located adjacent to each other. With this configuration, it is possible to provide a compact configuration of the system for optical inspection.

More preferably, the first plate portion and the second plate portion are connected to each other. For this purpose, the first plate portion and/or the second plate portion may comprise connecting elements, such as clamps or the like, for connecting the two plate portions with each other. Preferably, these connecting elements allow a detachable connection between the two plate portions. Even more preferably, the first plate portion and the second plate portion are integrally formed as one single plate element. In this case, the first plate portion is an area or a portion of the plate element and the second plate portion is another area or another portion of the plate element. Such a configuration allows for an even more compact configuration of the system for optical inspection.

Optionally, the main component group further comprises at least one rail element, preferably wherein the manipulator and/or the stand is/are movably in particular independently from each other, connected to the rail element.

The at least one rail element may comprise one or more channels for accommodating respective portions of elements to be connected with the rail element. In particular, the rail element may be made of a metal, preferably of an aluminum material.

Preferably, the main component group comprises more than one rail element which are configured to be combinable with each other in order to form a rail element system. For example, such a rail element system may be arranged on each of the first and second plate portions of the main component group. Preferably, the at least one rail element or the rail element system may be detachably attachable on each of the first and second plate portions of the main component group. In this way, a base plate with rail profiles may be provided. It is also conceivable that the rail element may be fixed or attached to the plate portions of the main component group, for example by screws and the like. It is further conceivable that the first plate portion and/or the second plate portion is/are configured as a rail element system. For example, a rail element system may be provided instead of the first plate portion and/or the second plate portion and serve the same purpose as the first plate portion and/or the second plate portion.

Preferably, the manipulator and/or the stand are connected to the rail element in a movable manner. With this configuration, the system for optical inspection can be easily adapted to a particular inspection task and/or a particular sample because the stand and/or the manipulator are easily movable along the rail elements. For example, each of the manipulator and the stand may be provided with an element or a portion which is configured to engage with the rail element, for example by engaging with one channel or more channels of the rail element. Preferably, the element or portion which is configured to engage with the rail element may comprise a screw or clamping connection for firmly connecting the stand and/or the manipulator to the rail element, once the desired position is set. In particular, the stand and the manipulator are movably connected to the rail element independently from each other such that the stand and the manipulator can be moved in different directions, for example. This configuration allows for an even more flexible configuration of the system for optical inspection. Although the stand, the manipulator, and other elements are movably connected to the at least one rail element, the connections between the respective elements and the rail element are configured to be stable, i.e., configured to allow for stable conditions of the positioning of the respective elements during optical inspection.

Optionally, the module component group further comprises at least one module container for housing the plurality of modules, wherein the module container preferably comprises a wheel unit and/or is positioned below the first and second plate portions.

The module container may be any type of container as long as it is adapted for housing the plurality of modules. Since the plurality of modules may also comprise highly sensitive cameras or camera systems, the module container is preferably made of a stable material in order to provide proper protection for highly sensitive modules. The container may be a box with a lid made of plastic material or metal. The module container may also be a box without a lid.

Preferably, the module container comprises a wheel unit. The wheel unit may be arranged at a lower side of the module container such that the wheel unit is in contact with a floor on which the system for optical inspection is located. The wheel unit may comprise a plurality of wheels. Further, the wheel unit may be detachably attachable to the module container.

Optionally, the module container is positioned below the first and second plate portions. Preferably, the first and second plate portions may be configured to be detachably connectable to the module container. Such connection may be realized by a clamping system and the like. With this configuration, i.e. positioning the at least one module container below the first and second plate portions, a compact and stable configuration of the system for optical inspection can be provided. Moreover, when the module container comprises the wheel unit, the whole optical inspection system can be easily moved on the floor. Accordingly, the system for optical inspection is more flexible in use. For example, with this configuration, the whole system for optical inspection may be moved below a large sample to be inspected, such as a car and the like. It is also conceivable that two or more module containers are stably stackable on top of each other, wherein only the lowermost module container comprises the wheel unit.

Preferably, the module containers are stackable by being detachably connectable to each other. Detachable connection may be realized by connecting elements, connecting members, clamping elements, and the like. By stacking two or more module containers on top of each other, the height of the system for optical inspection may be adjustable. By providing detachable connection, the height is quickly adjustable. For example, one module container may have a height of 20 cm or 40 cm. In this case, the height may be adjustable in steps of 20 cm or 40 cm, depending on the needs of a user and/or the requirements of the particular inspection task and/or the particular sample. For example, the height may be adjusted such that a user can operate the system while standing or sitting on a chair.

Alternatively, the wheel unit may be replaced by a fixing means for firmly fixing the module container to the floor.

Optionally, the module container comprises at least one compartment, preferably a plurality of compartments, for housing the plurality of modules, in particular in an ordered way, optionally wherein the compartments comprise a drawer and/or a tilt drawer.

The at least one compartment may be a separated space within the module container. For example, the at least one compartment may be separated from the rest of the space of the module container by one or more partition walls. Preferably, more than one compartment is provided in the module container for housing the plurality of modules. For example, all modules of type A may be housed in a first compartment, all modules of type B may be housed in a second compartment, and all modules of type C may be housed in third compartment, and so on. Such subdivision of modules allows for a quicker access to a particular type of modules. In particular, the plurality of modules is housed in an ordered way in the plurality of compartments. For example, the compartments may comprise foam elements, such as foam inserts or foam inlays, which may comprise recess portions for holding and/or supporting the modules in an ordered way. With this configuration, it is not only possible to provide the modules in an ordered way and therefore allow a quicker access to a particular module, it is also possible to protect the modules against vibrations or shocks.

Optionally, the at least one compartment comprises a drawer. The drawer may be movably connected to the module container. This configuration supports an even better protection of the modules when the drawer is in the closed state. Moreover, it is possible to provide the system for optical inspection with a high degree of order. Optionally, a front surface of the drawer may be labeled, wherein the label may indicate the modules contained in the respective drawer. This allows for an even quicker access to the respective modules and contributes in accelerating the adaption of the optical inspection system to a particular inspection task. Optionally, the drawer is a tilt drawer.

Preferably, the module component group comprises placing units for placing and/or receiving the sample as mutually exchangeable modules of type D associated with mutually different inspection tasks and/or samples, preferably wherein the placing units comprise at least one clamping system. In this context, the expression "type D" is to be understood as a name for another certain type of modules. In other words, all modules of type D are placing units. Since the placing units are mutually exchangeable and associated with mutually different inspection tasks and/or samples, it is possible to combine a specific placing unit, depending on the requirements of the optical inspection task and/or the sample, of the module component group with the main component group. Accordingly, it is possible to provide a versatile and flexible system for optical inspection.

The placing units may be any element or system which is able to hold the sample to be inspected in a certain position. For example, the placing unit may be a rod-like element which has a screw thread on one side thereof on which the sample to be inspected may be screwed. Further, the placing unit may comprise a hook or the like which is configured to engage with the sample for holding the sample in an upper position. The placing unit may also comprise a gripper, preferably a collaborative gripper for holding the sample.

Optionally, the placing unit may be associated with a particular portion of one of the first and second plate portions of the main component group. For example, the placing unit may be a recess portion on one of the first and second plate portions for receiving the sample therein. Optionally, the placing unit may comprise an electrically driven rotary disk or linearly movable stage on which the sample can be placed and thus moved. Further, the placing unit may comprise a linear drive, and/or a rotational drive, and/or stepper motor. The placing unit may also comprise a belt conveyor system on which the sample may be placed. The belt conveyor system of the placing unit may be used for optically inspection of the sample by means of smart cameras having a laser line projector. In this way, several sides of the sample can be inspected while the camera remains at a fixed position.

Preferably, the placing units are modular placing units in order to allow for quick exchange and to increase versatility of the system for optical inspection. The above described embodiments of placing units may also be combinable with one another.

Preferably, the placing units hold the sample in a fixed and secured way. For that purpose, the placing units preferably comprise at least one clamping system and/or fixtures. Such clamping systems may comprise several components, such as screws and holding elements and the like, which may be arranged in various configurations as required by the particular inspection task and or the particular sample to be inspected. More preferably, the clamping system are detachably connectable to at least one of the first plate portion and second plate portion of the main component group.

It is also conceivable that the placing unit may be arranged on one or more rail elements such that the placing unit is movably connected with the one or more rail elements.

Further, a rail element having a placing unit arranged thereon may be exchangeable/replaceable as a whole by another rail element having another placing unit arranged thereon. The same may apply to rail elements having a stand and/or to rail elements having a manipulator arranged thereon.

It is also conceivable that the placing unit is configured to hold and/or support a module of the module component group, such as, for example, a camera, instead of the sample.

Preferably, in the system for optical inspection according to the invention, a plurality of module containers are provided, preferably each module container containing a type A-module, a type B-module, and more preferably a type C-module and/or a type D-module, each associated with substantially the same inspecting task and/or sample.

With this configuration, a quicker adaption of the inspection device of the optical inspection system to a particular inspection task and/or sample is possible. For example, the system for optical inspection may be used for a certain number of different inspection tasks and/or samples. In this case, it may be beneficial if each module container contains the particular modules of type A, type B, preferably also of type C and/or type D suitable for the particular inspection task and/or the particular sample. In this way, depending on the particular inspection task and/or sample, only the corresponding module container comprising all modules for this particular inspection task and/or sample may need to be considered when selecting the modules.

For example, in one such module container, the contained particular modules of type A, type B, preferably also of type C and/or type D may be manufactured by a particular manufacturer. It is also conceivable that the contained particular modules may belong to the same technology and may be manufactured by different manufacturers.

Preferably, the main component group of the system for optical inspection further comprises at least one monitor, preferably wherein the at least one monitor and the type A-modules are configured to communicate with each other.

The monitor may be a computer monitor or a television screen and the like. Optionally, the at least one monitor may be connected, preferably detachably connected to at least one of the first plate portion and the second plate portion of the main component group. Preferably, the at least one monitor may be movably connected to the rail element. In this way, the monitor may also be movably connected to the first and/or second plate portions by the rail element.

It is also conceivable that the at least one monitor comprises a touch screen. For example, positions or settings relating to the manipulator or any other element of the optical system may be set/adjusted via the touch screen of the monitor. Moreover, the monitor may also be a tablet and the like having all the features of state-of-the-art tablets.

Preferably, the at least one monitor and the modules of type A are configured to communicate with each other. Since each module of type A is a camera or a camera system, the at least one monitor may display a picture and/or video of the sample to be inspected. In this way, the result of the optical inspection can be readily checked.

The system for optical inspection may comprise at least one controller or control unit configured to control one or more elements of the system. For example, there may be provided a first control unit configured to control the manipulator. There may also be provided one or more second control units configured to control one or more of the plurality of modules, such as the cameras, the lightings, and/or the camera lenses. It is further conceivable, to provide only one control unit configured to control the whole system. In case of more than one control unit, the control units may be configured to communicate with each other.

The control unit or the control units may be housed in the module container. The control units may be realized as a computer having a memory comprising one or more programs configured to perform optical inspection. Furthermore, the system may comprise one or more input devices, such as keyboards, with which the control unit or control units may receive input information and/or commands by a user operating the optical inspection system.

In summary, the system is configured to provide a plurality of optical tools, manipulators, and fixtures and is configured to provide a base plate to deploy the selected elements and, preferably, rail systems.

Another aspect of the invention is a method for adapting an inspection device for optically inspecting a sample, preferably by means of the system of the invention. The method comprises the steps of: providing the sample, providing a stand and a manipulator (which manipulator may be a manipulator module out of the manipulator module group as described above, preferably not a stand), preferably a robot, more preferably a collaborative robot, providing a camera as module of type A and a lighting as module of type B or selecting a camera out of a plurality of modules of type A and a lighting out of a plurality of modules of type B according to a particular inspection task and/or sample, optimizing and determining a first set of parameters for positioning of the sample, the stand, the selected camera, and the selected lighting for the particular inspection task and/or sample, deriving a second set of parameters for positioning of the sample, the manipulator, the selected camera, and the selected lighting from the first set of parameters.

With this method, the inspection device for optical inspection can be adapted or adjusted to a particular inspection task and/or to a particular sample to be inspected. For example, the sample may be one of a plurality of identical samples to be inspected. The stand and the manipulator may be identical to the ones described above. Preferably the manipulator is a robot, even more preferably a collaborative robot, as described above.

In the above method, the system for optical inspection may be used in the developer-device configuration.

Depending on the requirements of the particular inspection task and/or on the particular sample, a camera out of the plurality of modules of type A and a lighting out of the plurality of modules of type B are selected. If only one camera as module of type A and one lighting as module of type B are present, these are provided.

Next, the sample, the stand, the selected camera, and the selected lighting are positioned relative to each other according to the particular inspection task. For example, if the particular inspection task requires that a certain side or side surface of the sample be inspected, the sample and the camera may be positioned such that the certain side or side surface of the sample is directed to the camera sensor of the camera. The lighting may be positioned such that the certain side or side surface of the sample is appropriately illuminated by the lighting.

For example, the camera may be mounted to the stand. Preferably, the lighting may also be mounted to the stand. In this configuration, the positions of the sample, the stand, the selected camera, and the selected lighting may be optimized. This means that the positions may be adapted in such a way as to increase the quality of optical inspection. For example, this step may include that the lighting is optimally arranged with respect to the sample and the camera such that the light emitted by the lighting and reflected by the sample is predominantly detected by the camera (camera sensor) and disturbing light from light sources other than the lighting is suppressed.

The positions of the selected camera, the selected lighting, the sample, and the stand are associated with a first set of parameters. The first set of parameters may further include parameters relating to the configuration of the camera and the lighting, such as exposure time and lighting intensity and the like. Accordingly, the first set of parameters is optimized and determined for the particular inspection task.

Next, a second set of parameters for positioning of the sample, the manipulator, the selected camera, and the selected lighting is derived from the first set of parameters. For example, the first set of parameters determined may be transferred to a control unit. The control unit may consequently derive the second set of parameters for positioning of the manipulator, the sample, the selected camera, and the selected lighting.

In this way, i.e., by optimizing and determining the first set of parameters and deriving therefrom the second set of parameters as explained above, the inspection task to be performed by the inspection device for optical inspection is developed. With this method, it is possible to adapt the system for optical inspection to a particular inspection task and/or a particular sample without the need for performing cost-intensive, time-consuming planning and implementation tasks. This is a prerequisite for providing a versatile and cost-efficient method for optically inspecting a sample. Moreover, with the above method, it is possible to develop an optical inspection program according to the particular inspection task and derive therefrom a series inspection program.

Preferably, the method according to the invention further comprises positioning the manipulator, the sample, the selected camera, and the selected lighting according to the second set of parameters.

For example, the selected camera and the selected lighting may be attached to the manipulator and then automatically positioned in this way.

By performing the positioning of these components, the inspection device is able to perform optical inspection or series optical inspection of the sample or samples to be inspected according to the particular inspection task.

Another aspect of the invention is a method for optically inspecting a sample including the method for adapting the inspection device for optically inspecting the sample according to the invention, preferably by means of the system of any one of the preceding embodiments, wherein the method comprises scanning the sample according to the second set of parameters by means of the selected camera, the selected lighting, and the manipulator.

With this method, it is possible to perform optical inspection of a sample without the need for performing cost-intensive, time-consuming planning and implementation tasks beforehand. Accordingly, a versatile and cost-efficient method for optically inspecting a sample can be provided.

For example, scanning the sample may be performed by providing a system for optical inspection, in which the sample may be movably mounted and the camera for optical inspection may remain at a fixed position or vice versa.

Another aspect of the invention is a method for optically inspecting a sample by means of the system of any one of the preceding embodiments.

Yet another aspect of the invention is a use of the system for optical inspection according to any one of the preceding embodiments for optically inspecting a sample.

The system for optical inspection according to the invention may be used for in-line testings, series testings, process controls, identifications and mounting aids, sorting inspections, redundancy checks (for example by using different inspection technologies, such as different cameras), user trainings and education.

The system for optical inspection according to the invention may also be used for identification of samples, preferably for identification of samples out of a plurality of samples, wherein the samples of the plurality of samples are disordered. For that purpose, the configuration of the inspection device may be adjusted to the task of identification of samples by using the system for optical inspection in the developer-device configuration as described above. For identification of samples, the inspection device comprises a robot, preferably a collaborative robot, as manipulator, wherein the camera selected out of the type A-modules is mounted to the robot, preferably the collaborative robot.

The following aspects, features and/or modifications also form part of the invention and are independently from each other combinable with any one of the preceding embodiments. The following aspects, features and/or modifications are also combinable among each other. This combinability results from the modularity of the system according to the invention.
- Each of the modules of type A (cameras) and/or each of the modules of type B (lightings) and/or each of the modules of type C (camera lenses) may comprise and/or be combinable with optical filters such as grey filters and color filters and the like.
- The rail elements may be equipped with any number (depending on the available space) of elements/parts which are connectable to the rail elements.
- Power supply units of the manipulator, the lightings, the cameras, the placing units, the controllers/control units, the monitors, and the like may be housed in the at least one module container.
- The control unit or control units of the system for optical inspection may comprise at least one program for optical inspection and/or for analyses and/or for data management/data memory and may comprise units for network connection, such as wireless network connection.
- The module component group may comprise a printer for printing labels for labeling samples and parts/elements of the system for optical inspection.
- The main component group may comprise a mobile robot having one or more wheels and which may be configured to move/drive independently. The mobile robot may comprise one or more cameras. The mobile robot may be battery driven with replacement batteries therefor being housed in the module container.
- The module component group may comprise at least one gripper, preferably for gripping the sample, wherein the gripper may be detachably attachable to the stand and/or the manipulator. Preferably, the at least one gripper is a collaborative gripper. Instead of or additionally to the at least one gripper, at least one vacuum-based holder may be provided.
- The module component group may comprise force sensors. One or more force sensors may be integrated in one or more grippers.
- The system for optical inspection may comprise safety sensors for ensuring proper safety precautions for a user.
- The module component group may comprise wall elements, preferably made of a foam material, for enclosing movable parts and/or movable modules of the system for optical inspection in order to ensure proper safety precautions for a user.
- The module component group may comprise dummies and laser pointers for the simulation of travel paths of movable parts and/or movable modules of the system for optical inspection in order to detect collision risks.
- The at least one rail element may accommodate/receive the lightings, preferably via lighting stands, a printer for printing labels, linear drives, stepper motors.
- The system for optical inspection may comprise a mains supply duct with plug sockets and emergency stopping means.
- The module component group may comprise one or more manuals and/or software carriers for the system for optical inspection.
- The module component group may comprise and tools, wherein the tools preferably comprise caliper gauges and balances for robot balancing.
- The module component group may further comprise identical modules of A, B, C and/or D-type, respectively, as replacement modules. For example, the module component group may comprise two identical modules (A, B, C and/or D-modules), such as cameras, wherein one of the two identical cameras serves as replacement camera, for example, in case of malfunction of the other of the two identical cameras. In this way, by providing identical modules as replacement modules, in case of malfunction of a module, optical inspection by means of the optical inspection system can be resumed quickly, for example within a production line, thereby saving costs. It is also conceivable that one camera is attached to the stand which forms part of the developer device and the same camera is attached to the manipulator which forms part of the inspection device. In case of malfunction of the camera at the manipulator, optical inspection by means of the optical inspection system can be resumed by taking the camera at the developer device. In this way, a replacement party stocking is not needed or can be smaller, thereby reducing costs.
- The module component group may comprise at least one scanner, preferably for scanning barcodes.
- The module component group may comprise at least one transport container.
- The main component group and/or the module component group may further comprise sorting systems which are configured to sort the samples after being optically inspected by the inspection device.
- The main component group may further comprise a second manipulator, preferably a second robot, more preferably a second collaborative robot having the same functions as the manipulator, the robot, and the collaborative robot, respectively, as described above, which may be described as "first manipulator", "first robot", and "first collaborative robot". For example, in case the second manipulator is a second robot, the second robot may be provided with a camera attached thereto and a gripper. The second robot may be configured to identify a particular sample by means of the camera attached to the second robot out of a plurality of samples, wherein the samples of the plurality of samples may be disordered, and may be configured to take the particular sample by means of the gripper from the plurality of samples. The second robot may hold the particular sample by means of the gripper during optical inspection by means of the inspection device. For example, the second robot may hold the particular sample below the first robot having the camera attached thereto for optical inspection. After optical inspection, the second robot may sort the particular sample according to a result of the optical inspection.

### BRIEF DESCRIPTION OF THE DRAWINGS

Further preferred features and advantages of the present invention will become apparent from the following description of the drawings.
Fig. 1 is a schematic view of a preferred embodiment of the system for optical inspection according to the invention.
Fig. 2 is a schematic view of the module container of the system for optical inspection of Fig. 1.

### DETAILED DESCRIPTION OF THE PREFERRED EMBODIMENTS

Hereinafter, a preferred embodiment of the invention will be described in detail with reference to the accompanying drawings in order to describe the invention using illustrative examples. Further modifications of certain individual features described in this context can be combined with other features of the described embodiments to form further embodiments of the invention.

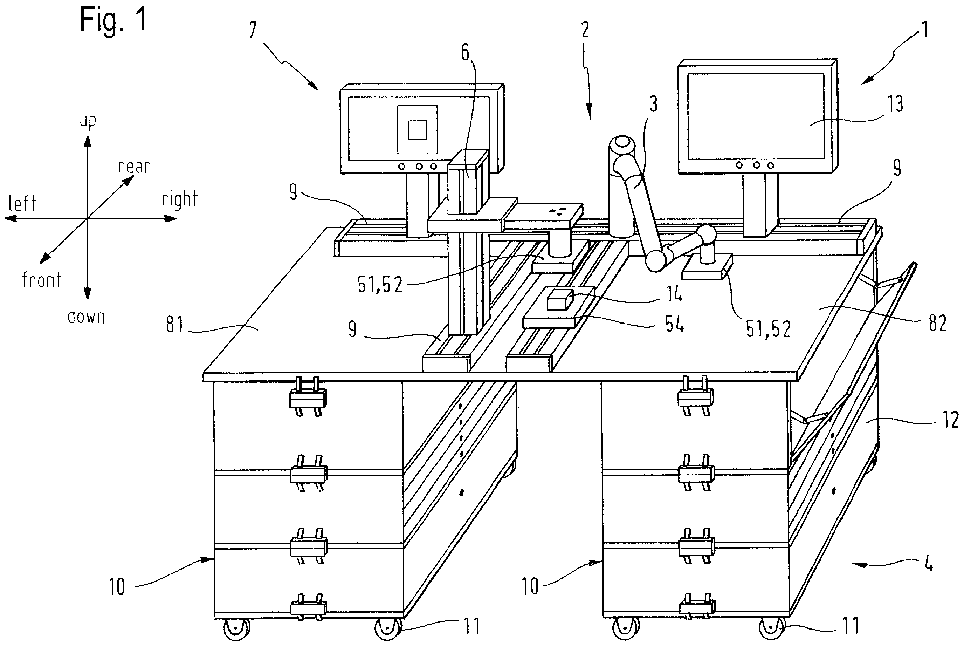

Fig. 1 is a schematic view of a preferred embodiment of the system for optical inspection according to the invention. The system comprises an inspection device 1 and a developer device 7. The main component group 2 of the system comprises a collaborative robot 3, a stand 6, a first plate portion 81, a second plate portion 82, rail elements 9, and monitors 13.

In the embodiment shown in Fig. 1, the first plate portion 81 and the second plate portion 82 are integrally formed so as to form one single plate element. In the embodiment, the first plate portion 81 is located on the left side of this plate element and the second plate portion 82 is located on the right side of this plate element. The plate element may be a tabletop made of a wooden material. The stand 6 is arranged on the first plate portion 81 so as to form part of the developer device 7, while the collaborative robot 3 is arranged on the second plate portion 82 so as to form part of the inspection device 1. Both the stand 6 and a collaborative robot 3 are movably connected to the rail elements 9 placed on the first plate portion 81 and the second plate portion 82. In this embodiment, the collaborative robot 3 is movable in the left-right direction while the stand 6 is movable in the front-rear direction. The rail elements 9, which allow a movement of the elements connected thereto in the left-right direction, are essentially arranged on the rear side of the first plate portion 81 and the second plate portion 82. With this configuration, a free space is provided on the first plate portion 81 and the second plate portion 82 for placing samples to be inspected thereon. Furthermore, the embodiment comprises two monitors 13 which are movably connected to the rail elements 9 via monitor stands.

The stand 6 has a substantially rectangular shape and comprises channels on each of its side surfaces, wherein the channels extend in the up-down direction, i.e., along the longitudinal axis of the stand 6. Further, the stand 6 comprises a mounting element to which modules 5 of the module component group 4 can be detachably attached. In this example, a unit comprising a camera 51 and a lighting 52, preferably with an coaxial alignment of the camera 51 and the lighting 52, is attached to the mounting element of the stand 6. The camera 51 and the lighting 52 are movably connected, via the mounting element, to the stand 6, such that they can move along the channels of the stand, i.e., in the up-down direction.

The collaborative robot 3 has a camera 51 attached thereto for optically inspecting the sample 14. In this example, a unit comprising a camera 51 and a lighting 52 is attached to the collaborative robot 3. Although in this embodiment, two cameras 51 are shown, one attached to the stand 6 and the other one attached to the collaborative robot 3, it is also conceivable that only one camera 51 is used which can be detachably attached to the stand 6 and the collaborative robot 3.

The sample 14 to be inspected (a cube-like sample in this example) is placed on a placing unit 54 and secured by the placing unit 54, which, in this embodiment, comprises a clamping system. The placing unit 54 itself is arranged on a rail element 9 and being movably connected to the rail element 9.

As can be seen in Fig. 1, the monitor 13 arranged on the first plate portion 81 displays a picture of the sample 14 which is taken by the camera 51.

The module component group 4 of the system for optical inspection according to this embodiment comprises several module containers 10 for housing the plurality of modules 5 and arranged below the first plate portion 81 and the second plate portion 82 of the main component group 2. The module containers 10 are stacked on top of each other and are detachably connected to each other by clamping elements. Although in this embodiment, the module containers 10 are arranged below the first plate portion 81 and the second plate portion 82, or, more generally, below the main component group 2, it is also conceivable that the module containers 10 are arranged next to or in the vicinity of the main component group 2. In this case, the plate element formed by the first plate portion 81 and the second plate portion 82 may be supported by stands or table legs.

As can be seen in Fig. 1, the module containers 10 are detachably attached to the plate element formed by the first plate portion 81 and second plate portion 82 by clamping elements. In this embodiment, each of the module containers 10 comprises a wheel unit 11, placed below the module containers in order to be in contact with the floor, wherein each wheel unit 11 comprises four wheels. The wheel units 11 are detachably connected to the module containers 10 via clamping elements.

The module containers 10 comprise one or more compartments 12, wherein the compartments 12 in this embodiment are realized by drawers and tilt drawers, respectively.

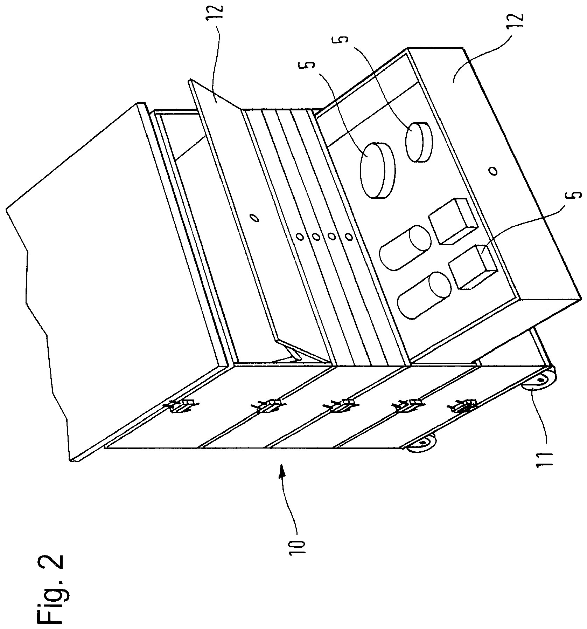

Fig. 2 is a schematic view of the module container 10 of Fig. 1. One of the drawers is in an opened position. As can be seen, the modules 5 are housed in the drawer in an ordered way. As described above, this can be realized by foam elements, such as foam inserts or foam inlays, which may comprise recess portions for holding and/or supporting the modules in an ordered way. In this example, the uppermost module container 10 has a plate element attached thereto by clamping elements.

Next, a process for adapting the inspection device 1 of the system for optical inspection of the described embodiment to a particular inspection task and/or a particular sample will be described.

At first, depending on the requirements of the particular inspection task and/or on the particular sample 14, a camera 51 out of the plurality of modules of type A and a lighting 52 out of the plurality of modules of type B are selected. If necessary, also a certain type of camera lens 53 out of the plurality of modules of type C as well as a certain placing unit 54 out of the plurality of modules of type D may be selected.

Next, the system for optical inspection is used in the developer-device configuration. In this step, the sample 14, the stand 6, the selected camera 51, and the selected lighting 52 (and, optionally, the selected camera lens 53 and the selected placing unit 54) are positioned relative to each other according to the desired/particular inspection task. For example, if the particular inspection task requires that a certain side or side surface of the sample 14 be inspected, the sample 14 and the camera 51 may be positioned such that the certain side or side surface of the sample 14 is directed to the sensor of the camera 51. The lighting 52 may be positioned such that the certain side or side surface of the sample 14 is appropriately illuminated by the lighting 52. In the example in Fig. 1, a unit comprising a camera 51 and a lighting 52 is provided.

For example, the sample 14 may be placed on the first plate portion 81, preferably by using the placing units 54. The sample 14 may also be placed on a rail element 9, preferably by using the placing units 54. The camera 51 may be mounted to the stand 6, for example, via the mounting element. Preferably, the lighting 52 may also be mounted to the stand 6. In this case, the camera 51 and the lighting 52 are movable, in particular independently from each other along the long axis of the stand 6. Here, a unit comprising a camera 51 and a lighting 52 is provided. The stand 6 may be movably connected to the rail element 9 that is placed on the first plate portion 81.

The selected camera 51 may optically image the sample 14, preferably in terms of taking a picture or pictures of the sample 14. The pictures may be displayed on the monitor 13 arranged on the second plate portion 82. In this configuration, the positions of the sample 14, the stand 6, the selected camera 51, and the selected lighting 52 are optimized. This means that the positions are adapted in such a way as to increase the quality of the picture obtained by optically imaging the sample 14 with the selected camera 51. For example, this step may include that the lighting 52 is optimally arranged with respect to the sample 14 and the camera 51 such that the light emitted by the lighting 52 and reflected by the sample 14 is predominantly detected by the camera 51 (camera sensor) and disturbing light from light sources other than the lighting 52 is suppressed.

The positions of the selected camera 51, the selected lighting 52, the sample 14, and the stand 6 are associated with a first set of parameters. The first set of parameters may further include parameters relating to the configuration of the camera 51 and the lighting 52, such as exposure time and lighting intensity and the like. In this way, the first set of parameters is optimized and determined for the particular inspection task.

Next, a second set of parameters for positioning of the sample 14, the collaborative robot 3, the selected camera 51, and the selected lighting 52 is derived from the first set of parameters. Deriving the second set of parameters from the first set of parameters may include that the first set of parameters is inputted via an input device, such as a keyboard, into a control unit of the system for optical inspection, such as a computer, which then derives therefrom, for example via a particular program, the second set of parameters. Further, the foregoing step may include that the second set of parameters is inputted or transferred to the control unit of the collaborative robot 3, provided that the control unit of the collaborative robot 3 is different from the control unit which derives the second set of parameters from the first set of parameters. It is also conceivable, that the second set of parameters is automatically derived from the first set of parameters and automatically transferred to the control unit controlling the collaborative robot 3.

While the first set of parameters is related to the stand 6, i.e., to the developer device 7, the second set of parameters is related the collaborative robot 3, i.e., the inspection device 1. In this way, i.e., by optimizing and determining the first set of parameters and deriving therefrom the second set of parameters as explained above, the inspection task to be performed by the system for optical inspection is developed by the developer device 7 and then transferred to the inspection device 1 which is then configured to perform optical inspection of the sample according to the particular inspection task. In other words, with the described process, it is possible to develop an optical inspection program according to the particular inspection task and derive therefrom a series inspection program.

The collaborative robot 3, the sample 14, the selected camera 51, and the selected lighting 52 are then positioned according to the second set of parameters. For example, the sample 14 may be positioned automatically by an electrically driven, i.e., movable and controlled placing unit 54. For example, the selected camera 51 and the selected lighting 52 may be attached to the collaborative robot 3 and automatically positioned in this way. Here, a unit comprising a camera 51 and a lighting 52 is provided.

A process for optically inspecting the sample 14 may then be performed by scanning the sample 14 according to the second set of parameters by means of the selected camera 51, the selected lighting 52, and the collaborative robot 3.

### LIST OF REFERENCE SIGNS

- 1: inspection device
- 2: main component group
- 3: manipulator
- 4: module component group
- 5: module/plurality of modules
- 6: stand
- 7: developer device
- 9: rail element
- 10: module container
- 11: wheel unit
- 12: compartment
- 13: monitor
- 14: sample
- 51: camera/cameras
- 52: lighting/lightings
- 53: camera lens/camera lenses
- 54: placing unit/placing units
- 81: first plate portion
- 82: second plate portion

## Claims

1. A system comprising an inspection device (1) for optical inspection of a sample (14), in particular based on industrial image processing, the inspection device (1) being adaptable to different inspection tasks and/or samples (14), the system comprising:
a main component group (2) comprising at least a manipulator (3), preferably a robot, more preferably a collaborative robot, and
a module component group (4) comprising a plurality of modules (5) for combination with the main component group (2) for inspection of the sample (14),
the plurality of modules (5) comprising at least one camera (51) as module of type A, and at least one lighting (52) as module of type B,
wherein the inspection device (1) comprises the camera (51), the lighting (52), and the manipulator (3), and is configured to be adapted to a particular inspection task and/or to a particular sample (14) by positioning the camera (51), the lighting (52), and the manipulator (3) according to the particular inspection task and/or relative to the particular sample (14).

2. The system of claim 1,
wherein the plurality of modules (5) comprising at least two, preferably at least three cameras (51) as mutually exchangeable modules of type A and associated with mutually different inspection tasks and/or samples (14), and/or at least two, preferably at least three lightings (52) as mutually exchangeable modules of type B and associated with mutually different inspection tasks and/or samples (14),
wherein the inspection device (1) is configured to be adapted to a particular inspection task and/or to a particular sample (14) by comprising a camera (51) selected out of the type A-modules according to the particular inspection task and/or the particular sample (14), a lighting (52) selected out of the type B-modules according to the particular inspection task and/or the particular sample (14), and the manipulator (3), and by positioning the selected camera (51), the selected lighting (52), and the manipulator (3) according to the particular inspection task and/or relative to the particular sample (14).

3. The system of any of claims 1 and 2,
wherein at least some, preferably all, of the plurality of modules (5) comprise an interface portion for detachable attachment to the main component group (2), wherein the interface portion is system-compatible, preferably standardized.

4. The system of any of claims 1 to 3,
wherein the plurality of modules (5) further comprises camera lenses (53) as mutually exchangeable modules of type C associated with mutually different inspection tasks and/or samples (14).

5. The system of any of claims 1 to 4,
wherein the main component group (2) further comprises a stand (6), preferably to which the selected camera (51), the selected lighting (52), and/or the sample (14) are movably mountable, most preferably independently from each other.

6. The system of any of the preceding claims,
wherein the system is configured to be used as a developer device (7) for adjusting the configuration of the inspection device (1) to the particular inspection task and/or the particular sample (14), by positioning the selected camera (51), the selected lighting (52), and the particular sample (14) relative to each other, preferably by mounting at least one of them at the stand (6), by optimizing the positions relative to each other and by determining the optimized positions of the selected camera (51), the selected lighting (52), and the particular sample (14).

7. The system of any of claims 5 and 6,
wherein the main component group (2) further comprises first and second plate portions (81, 82), the stand (6) being arranged on the first plate portion (81) so as to form part of the developer device (7) and the manipulator (3) being arranged on the second plate portion (82) so as to form part of the inspection device (1), wherein the first plate portion (81) and the second plate portion (82) are located adjacent to each other, preferably wherein the first plate portion (81) and the second plate portion (82) are connected to each other or integrally formed.

8. The system of any of the preceding claims,
wherein the main component group (2) further comprises at least one rail element (9), preferably wherein the manipulator (3) and/or the stand (6) is/are movably, in particular independently from each other, connected to the rail element (9).

9. The system of any of the preceding claims,
wherein the module component group (4) further comprises at least one module container (10) for housing the plurality of modules (5), the module container (10) preferably comprising a wheel unit (11) and/or being positioned below the first and second plate portions (81, 82).

10. The system of claim 9,
wherein the module container (10) comprises at least one compartment (12), preferably a plurality of compartments (12), for housing the plurality of modules (5), in particular in an ordered way, optionally wherein the compartment(s) (12) comprise(s) a drawer and/or a tilt drawer.

11. The system of any of the preceding claims,
wherein the module component group (4) further comprises placing units (54) for placing and/or receiving the sample (14) as mutually exchangeable modules of type D associated with mutually different inspection tasks and/or samples (14), preferably wherein the placing units (54) comprise at least one clamping system.

12. The system of any of claims 9 to 11,
wherein a plurality of module containers (10) are provided, preferably each module container (10) containing a type A-module, a type B-module, and more preferably a type C-module and/or a type D-module, each associated with substantially the same inspecting task and/or sample (14).

13. The system of any of the preceding claims,
wherein the main component group (2) further comprises at least one monitor (13), preferably wherein the at least one monitor (13) and the type A-modules are configured to communicate with each other.

14. A method for adapting an inspection device (1) for optically inspecting a sample (14), preferably by means of the system of any of claims 1 to 13, comprising:
providing the sample (14),
providing a stand (6) and a manipulator (3), preferably a robot, more preferably a collaborative robot,
providing a camera (51) as module of type A and a lighting (52) as module of type B or selecting a camera (51) out of a plurality of modules of type A and a lighting (52) out of a plurality of modules of type B according to a particular inspection task and/or sample (14),
optimizing and determining a first set of parameters for positioning of the sample (14), the stand (6), the selected camera (51), and the selected lighting (52) for the particular inspection task and/or sample (14),
deriving a second set of parameters for positioning of the sample (14), the manipulator (3), the selected camera (51), and the selected lighting (52) from the first set of parameters.

15. The method of claim 14, further comprising:
positioning the manipulator (3), the sample (14), the selected camera (51), and the selected lighting (52) according to the second set of parameters.

16. A method for optically inspecting a sample (14) including the method for adapting the inspection device for optically inspecting the sample (14) according to claims 14 or 15, preferably by means of the system of any of claims 1 to 13, wherein the method comprises scanning the sample (14) according to the second set of parameters by means of the selected camera (51), the selected lighting (52), and the manipulator (3).
